# EUROPEAN PATENT APPLICATION

(11) **EP 1 398 106 A1**
(43) Date of publication of application: **17.03.2004**
(21) Application number: 03020665.0
(22) Date of filing: 11.09.2003
(51) Int. Cl.: B23K 20/12, B23K 20/16, B23K 35/02, E01B 11/44, E01B 29/44

(54) **Method and apparatus for welding rails with a rotating welding steel disc**

(30) Priority: 14.09.2002 GB 0221372; 15.05.2003 GB 0311133
(71) Applicant: AEA Technology plc, Didcot, Oxfordshire OX11 0QJ (GB)
(72) Inventor: Gill, Stephen, Leighton Crewe Cheshire CW1 4TJ (GB); Lewis, Michael Williams James, Comberbach Cheshire CW9 6PB (GB); Watson, Maxine, Galgate Lancaster Lancashire LA2 0NX (GB)
(74) Representative: Mansfield, Peter Turquand

(57) **Abstract**

Rails (10,12) are welded end to end by a friction-welding process analogous to forging. After cutting off the ends of the rails (10,12) to form a gap, the rails are secured in alignment. A disc (24) of steel compatible with that of the rails is rotated at high speed and gradually introduced into the gap between the ends of the rails (10,12), from above. Friction causes the temperature to rise to above red hot and the disc shears (or is caused to shear) when the temperature gets sufficiently hot. The rotation of the disc (24) stops, while the rail (10,12) ends and disc (24) are forced together while the joint welds and cools. Preferably the rails (10,12) are urged together with jacks (18) while the rotating disc (24) is between then, and after the rotation stops, to ensure tension in the rails (10,12) and to ensure forging occurs. The excess disc (24) material is then cut away, and the weld area is ground smooth. A weld of good metallurgical quality is thereby achieved.

## Description

This invention relates to a method and an apparatus for welding rails and similar items end to end.

In the context of railway lines, it is now common for lengths of metal rails to be joined end to end to form continuous welded rail. The rails are joined under tension to ensure that, if the ambient temperature were to rise, thermal expansion would not lead to compressive forces with the consequential risk of buckling. Various methods are known for joining the rails together, for example using the thermite process to form molten steel in situ from a mixture of aluminium powder and iron oxide, or "flash butt" welding using a high current electric discharge between the rail ends. Both processes generate molten metal, and so temperatures above 1500°C, and there is therefore a risk that parts of the weld may undergo a phase change to a more brittle phase. In each case also there is risk of impurities such as slag being incorporated within the weld, or even air inclusions, and these too would increase the risk of rail breakage.

Friction welding has also been suggested for welding rails together. Conventionally friction welding involves rotating two objects relative to each other to generate frictional heating, but with long objects like rails that are not of circular cross-section it is difficult to ensure the rotational motion stops with the rail ends accurately aligned. For example GB 2 368 309 suggests forming semi-cylindrical recesses in the opposed ends of two rails, and rotating a cylindrical intermediate member between them; GB 2 322 586 suggests vibrating an intermediate member between the opposed ends of two rails that have been cut straight. Neither approach is entirely satisfactory. To ensure formation of a high integrity joint it is important to avoid overheating any regions of the rail, and since the rate of heating depends on the sliding velocity, this should be as uniform as possible.

To minimise the length of rail that is heated by conduction from the frictional contact, the heating stage should be rapid, and since the thinner regions of the rail (for example the tips of the foot) may be prone to deformation if subjected to a high loads, it is desirable to use a comparatively low contact load combined with a high velocity during the heating phase.

According to the present invention there is provided a method for welding rails end to end, the method comprising supporting the rails end to end and aligned with a gap between them, the support means including means to secure the rails and means to urge the ends together, selecting a disc of steel compatible with that of the rails, rotating the disc about an axis that is parallel to but above that of the rails, and introducing the disc into the gap between the ends of the rails, so that friction between the disc and the rail ends causes the temperature to rise, the disc being introduced progressively so that the disc contacts the head before it contacts the foot of the rail, the disc shearing off when the temperature of the opposed surfaces has risen sufficiently, and then urging the rail ends and disc together while the joint welds and cools.

Preferably the rail ends are urged towards each other while the disc is rotating between them, and after the rotation stops. Typically the temperature rises to about 900°C as a consequence of the friction, which is well above red heat, and the welding process is analogous to forging. The close fit between the ends of the rails and the disc causes flow of material during the welding process which removes slag from the weld area.

An increase in the contact force may be used to brake the rotations, with the disc shearing from its axle, which allows a slow rundown of the drive system. The shearing may take place at a joint between the disc and its axle, in the axle itself, or in the disc itself. Alternatively or additionally the disc may define perforations or grooves which provide a point of weakness and cause localised stress concentrations, and these may be such that the disc shears at the point of weakness when the weld region reaches an adequate temperature. For example there may be a groove that follows a circular path, or such a groove on both sides of the disc, or a ring of perforations or slots.

The excess disc material is then cut away, and the weld area is ground smooth. The resulting weld is of good metallurgical quality, particularly because such comparatively low temperatures, well below the melting point, ensure that brittle phases are not formed.

The invention also provides an apparatus for welding rails end to end, the apparatus comprising means to support the rails end to end and aligned, the support means including means to secure the rails, and means to urge the ends together, and a motor for rotating a disc about an axis that is parallel to but above that of the rails, so that the disc can be progressively introduced into the gap between the ends of the rails and be forced to rotate whilst in the gap, and such that the disc shears off when the temperature of the opposed surfaces has risen sufficiently.

Preferably the apparatus also includes an enclosure or shroud to surround those parts of the rotating disc that are not between the ends of the rails, and this shroud may incorporate thermal insulation. Means may also be provided to introduce an inert gas into the shroud.

It will be appreciated that the method and apparatus of the invention are applicable either in a factory situation, or on-site, as long as a source of power is available. It will also be appreciated that because the process is analogous to forging, and does not involve melting of the material, the potential risks associated with known joining techniques are avoided.

The disc may be slightly tapering, or may be parallel-faced; in either case the rails may be cut square. The disc is preferably thin, for example less than 10 mm and more preferably no more than 6 mm. The invention also provides a disc suitable for use in such a method, the disc being of a steel compatible with that of the rails, the disc comprising means to connect to an axle, and defining perforations or grooves that provide a point of weakness such that the disc shears at the point of weakness when the weld region reaches an adequate temperature.

The invention will now be further and more particularly described, by way of example only, and with reference to the accompanying drawings, in which:
Figure 1 shows a diagrammatic side view of a rail joining apparatus of the invention; and
Figure 2 shows a view, primarily in elevation, on the line 2-2 of figure 1.

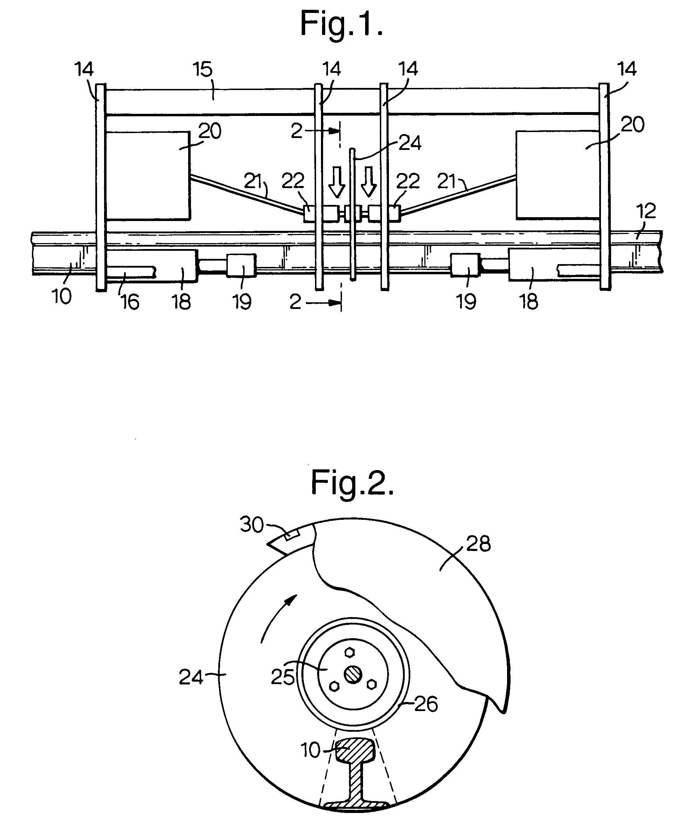

Referring to figure 1, two rails 10 and 12 are arranged end to end, the opposed ends having been cut off square, with a gap of width 6 mm between them; it is beneficial also to grind the end surfaces to ensure flat, clean, bright surfaces. The rails are aligned with each other by locating in apertures in alignment plates 14, two of which are close to the joint and the other two are well spaced away from it. The alignment plates 14 are mounted on a strong rigid steel tube 15 above and parallel to the rails 10 and 12, and are also secured to each other by tie-rods 16 on either side of the rails 10 and 12 (shown broken away, for clarity), the tube 15 being 2.5 m long. The end plates 14 each support hydraulic jacks 18 which act on clamps 19 so the ends of the rails 10 and 12 can be forced together. The hydraulic jacks 18 consequently also enable tension to be applied to one or both of the rails 10 and 12, to achieve a desired stress-free temperature, while the tie-rods 16 prevent the end plates 14 from being pushed apart under the hydraulic pressure.

Two high-powered hydraulic motors 20, each 50 kW in this example, are mounted on the end plates 14 and are coupled by drive shafts 21 and couplings 22 to a steel disc 24 clamped between bosses 25, the couplings 22 locating in slots in the middle alignment plates 14. Referring also to figure 2, the disc 24 is of the same type of steel as that of the rails, for example carbon steel for use with carbon steel rails, or at least of a compatible type of steel, and is of thickness 6 mm and of diameter 50 cm. There is a groove 26 in the surface of the disc 24 that follows a circular path about halfway between the outside of the boss 25 and the part of the disc 24 that passes between the ends of the rails 10 and 12 (when the disc 24 is fully inserted, as shown in figure 2). A mechanism (not shown) enables the couplings 22 and the disc 24 to be moved vertically, so as to gradually insert the disc 24 into the gap.

In use, the disc 24 is rotated at high speed and the mechanism is activated to move it downward (as indicated by the arrows) into the gap between the rails 10 and 12. As the disc 24 is spinning the jacks 18 are activated to force the ends of the rails 10 and 12 towards each other, and therefore into contact with the disc 24. Friction between the ends of the rails 10 and 12 and the disc 24 raises the temperature of the disc 24 and the adjacent parts of the rails 10 and 12 to a forging temperature that may for example be at or above 900°C. When a suitable temperature has been reached, rotation of the disc 24 is stopped, by fracturing of the disc 24 at the weak point produced by the groove 26, so that the drive motors 20 can be brought to rest gradually. Activation of the jacks 18 continues as the material of the disc 24 merges with that of the rails 10 and 12 by a process analogous to forging.

Typically the velocity of the disc 24 relative to the rail 10 is about 7 m/s (varying with radius from the axis of rotation), and once this speed has been reached the contact force from the jacks 18 may be adjusted so that the rotational speed remains substantially constant. This corresponds to a rotational speed of about 15 revolutions per second. For example the contact force might be about 8 tonnes (80 kN). Because the disc 24 is progressively introduced into the gap from above, the head of the rails 10 and 12 is heated for somewhat longer than the foot. There is considerably more mass in the head than in the foot, so that a substantially uniform temperature is thereby achieved. During the joining process material flows out of the weld zone, so that any slag formed on the metal surfaces tends to be carried out of the rail area.

When the material has cooled, the excess material from the disc 24 is cut away, for example along the broken lines shown in figure 2. The protruding material is then ground away to provide a smooth welded join between the rails 10 and 12.

Preferably the apparatus also includes a shroud 28 (not shown in figure 1, and shown broken away in figure 2) that encloses the parts of the disc 24 outside the rails, this shroud reducing the risk of the disc 24 hitting ballast or any other objects, and the shroud preferably includes thermal insulation to minimise radiant heat loss from the spinning disc 24 when it is red hot. It may also be provided with a supply of an inert gas such as nitrogen to suppress oxide formation on the surface of the disc 24 when it is red hot.

It will be appreciated that the disc 24 is a disposable item, a new disc 24 being used for each rail weld. The discs 24 may be of uniform thickness, as shown, or may be slightly tapered. Where the disc is tapered, the gap between the rail ends may also be tapered, the disc taper being larger than the rail taper so that the heads of the rails are heated first.

Preferably operation of the apparatus is automated, for example under computer control, in particular to ensure that the ends of the rails 10 and 12 are heated evenly. For example the disc 24 may overlap the rail head only for a predetermined time period and contact force, before being progressively lowered until it overlaps the head, the web and the foot. Hence the rate of downward movement of the disc 24 is monitored and the forces applied by the jacks 18 are also monitored, and these measurements are used for feedback control of the process. The temperature of the disc 24 may be monitored by a non-contact radiation sensor 30, rotation of the disc 24 being stopped when a threshold temperature has been reached, or when a threshold temperature has been exceeded for a predetermined time; the appropriate threshold temperature will be somewhat different depending on the type of steel in the rails 10 and 12 and the disc 24. The forging temperature may be up to 1000°C, although preferably not above 950°C, and kept to as low a value as possible commensurate with good weld integrity, for example as low as 700°C.

The stopping of the rotation of the disc 24 occurs when the disc shears at the weak point defined by the groove 26. This may be caused by an increase in the contact force and the friction force, by increasing the force from the hydraulic jacks 18. Alternatively it may happen as a result of the decreasing strength of the steel in the disc 24 as its temperature increases. For example the carbon/manganese steel EN14 has a 0.2% yield strength at room temperature of about 500 MPa, which gradually decreases with temperature to about 400 MPa at about 450°C, but which drops very rapidly at higher temperatures, being only 200 MPa at 600°C. Similarly the carbon steel EN9 has a 0.2% yield strength at room temperature of about 375 MPa, which decreases to about 330 MPa at 300°C but then drops rapidly to about 200 MPa at about 550°C. The disc in the vicinity of the weak point (the groove 26 in this example) can therefore be designed to be sufficiently strong until its temperature reaches say 600°C in the vicinity of the weak point, and it then shears.

## Claims

1. A method for welding rails (10, 12) end to end, the method comprising supporting the rails end to end and aligned with a gap between them, the support means (14, 15) including means (14) to secure the rails and means (18, 19) to urge the ends together, selecting a disc (24) of steel compatible with that of the rails, rotating (20) the disc (24) about an axis that is parallel to but above that of the rails (10, 12), and introducing the disc into the gap between the ends of the rails, so that friction between the disc (24) and the rail ends causes the temperature to rise, the disc (24) being introduced progressively so that the disc contacts the head before it contacts the foot of the rail (10, 12), the disc (24) shearing off when the temperature of the opposed surfaces has risen sufficiently, and then urging the rail ends and disc together while the joint welds and cools.

2. A method as claimed in claim 1 wherein the disc (24) is caused to shear off by an increase in the contact force (18, 19).

3. A method as claimed in claim 1 wherein the disc (24) incorporates stress-concentrating features (26) to define a weak point.

4. An apparatus for welding rails (10, 12) end to end, the apparatus comprising means to support the rails end to end and aligned, the support means including means (14, 15, 16) to secure the rails, and means (18, 19) to urge the ends together, and a motor (20) for rotating a disc (24) about an axis that is parallel to but above that of the rails (10, 12), so that the disc (24) can be progressively introduced into the gap between the ends of the rails (10, 12) and be forced to rotate whilst in the gap, and such that the disc (24) shears off when the temperature of the opposed surfaces has risen sufficiently.

5. A disc (24) for use in a method as claimed in any one of claims 1 to 3 wherein the disc (24) is less than 10 mm thick, of a steel compatible with that of the rails (10, 12), the disc (24) comprising means (25) to rotate it, and defining perforations or grooves (26) that provide a point of weakness such that the disc (24) shears at the point of weakness when the weld region reaches an adequate temperature.
